# EUROPEAN PATENT APPLICATION

(11) **EP 4 571 222 A1**
(43) Date of publication of application: **18.06.2025**
(21) Application number: 23854328.4
(22) Date of filing: 10.08.2023
(51) Int. Cl.: F25D 23/06, B60N 3/10, F25D 11/00

(54) **THERMAL INSULATION LAYER, VEHICLE-MOUNTED REFRIGERATOR AND VEHICLE**

(30) Priority: 15.08.2022 CN 202222145150 U
(71) Applicant: Beijing Chehejia Automobile Technology Co., Ltd., Beijing 101300 (CN)
(72) Inventor: ZHANG, Ziwen, Beijing 101300 (CN); QIU, Peng, Beijing 101300 (CN); GU, Yulong, Beijing 101300 (CN)
(74) Representative: Regimbeau
(86) International application number: PCT/CN2023/112316
(87) International publication number: WO 2024/037427

(57) **Abstract**

Disclosed are a thermal insulation layer, a vehicle-mounted refrigerator and a vehicle. The thermal insulation layer comprises a shell, an inner container, and a heat insulation part arranged between the shell and the inner container, wherein a positioning structure is arranged between the shell and the inner container, and the inner container and the heat insulation part are positioned on the shell by means of the positioning structure.

## Description

### CROSS-REFERENCE TO RELATED APPLICATION

The present application claims priority to Chinese Patent Application No. 202222145150.4 filed on August 15, 2022, the contents of which are hereby incorporated by reference in its entirety.

### TECHNICAL FIELD

The present application relates to the technical field of vehicles, and particularly relates to a thermal insulation layer, a vehicle refrigerator, and a vehicle.

### BACKGROUND

A vehicle refrigerator is a mobile refrigeration device, which is widely used in various types of vehicles. In order to ensure a refrigeration effect of the vehicle refrigerator, foam material is usually filled between a casing and an inner liner of the refrigerator. However, the foam material will generate a thrust when it is filled, which tends to cause the inner liner and thermal insulation material to offset with respect to the casing, which tends to result in a matching problem caused by appearance deformation, and reduce the thermal insulation capacity of the thermal insulation layer.

### SUMMARY

In view of the above, embodiments of the present application propose a thermal insulation layer, a vehicle refrigerator, and a vehicle.

Embodiments of a first aspect of the present application provide a thermal insulation layer including a casing, an inner liner, and a thermal isolation member arranged between the casing and the inner liner. A positioning structure is arranged between the casing and the inner liner, and the inner liner and the thermal isolation member are positioned on the casing through the positioning structure.

In some embodiments, the positioning structure includes an inner liner positioning member and a thermal isolation layer positioning member. The inner liner positioning member is arranged on an outer wall of the inner liner, and the thermal isolation layer positioning member is arranged on an inner wall of the casing.

In some embodiments, the inner liner positioning member includes a support seat, a nut post and a screw. The support seat is arranged on the outer wall of the inner liner, an end of the nut post is fixedly connected to the support seat, the casing is provided with a through hole in which the screw is arranged, and the screw is screwed to the nut post.

In some embodiments, one end of the nut post away from the support seat is provided with a positioning portion, which cooperates with the through hole and is engaged in the through hole.

In some embodiments, at least one reinforcing rib is provided on an arc-shaped curved surface of the nut post, and the reinforcing rib is fixedly connected to the support seat.

In some embodiments, the positioning structure further includes a positioning enhancement member for assisting a positioning of the inner liner.

In some embodiments, the positioning enhancement member includes a positioning protrusion arranged on the outer wall of the inner liner and a positioning hole arranged on the casing. The positioning protrusion is located on a side of the inner liner positioning member, and an end of the positioning protrusion cooperates with the positioning hole and is engaged in the positioning hole.

In some embodiments, the thermal isolation layer positioning member includes a positioning post arranged on the inner wall of the casing. The thermal isolation member is provided with a positioning opening, and the positioning post cooperates with the positioning opening and is engaged in the positioning opening.

In some embodiments, the thermal isolation member is a vacuum thermal isolation plate.

Embodiments of a second aspect of the present application provide a vehicle refrigerator including the thermal insulation layer according to the embodiments of the first aspect.

Embodiments of a third aspect of the present application provide a vehicle including the vehicle refrigerator according to the embodiments of the second aspect.

As can be seen from the above, in the thermal insulation layer, the vehicle refrigerator, and the vehicle according to the embodiments of the present application, by arranging the inner liner between the casing and the thermal isolation member, the heat exchange between the inside and the outside of the thermal isolation layer can be reduced, and the thermal insulation effect can be improved. In addition, a positioning member is arranged between the casing and the inner liner to restrict and position the inner liner and the thermal isolation member, to avoid the offset of the inner liner and the thermal isolation member during the filling of the foam material, thereby ensuring the matching effect and the thermal insulation capacity of the thermal insulation layer.

### BRIEF DESCRIPTION OF THE DRAWINGS

FIG. 1 is a schematic view showing a positioning structure and a thermal insulation layer of an embodiment of the present application.
FIG. 2 is a schematic view showing an inner liner of an embodiment of the present application.
FIG. 3 is a schematic view showing a positioning member for a thermal insulation layer and a casing of an embodiment of the present application.
FIG. 4 is a schematic view showing a vehicle refrigerator of an embodiment of the present application.

Reference numerals: 1. casing; 2. inner liner; 3. thermal isolation member; 4. inner liner positioning member; 41. support seat; 42. nut post; 42a. through hole; 42b. positioning portion; 42c. reinforcing rib; 43. screw; 5. thermal isolation layer positioning member; 51. positioning post; 51a. positioning opening; 6. positioning enhancement member; 61. positioning protrusion; 62. positioning hole; 7. foam material.

### DETAILED DESCRIPTION

In order to be able to more clearly understand the aforementioned purposes, features and advantages of the present application, the technical solutions of the present application will be further described below. It should be noted that embodiments in the present application and technical features in the embodiments can be combined with each other without conflict.

Although numerous specific details are set forth in the following description to facilitate the understanding of the present application, the present application may be implemented in other ways than those described herein. It should be noted that the described embodiments are only part of and not all of the embodiments of the present application.

A vehicle refrigerator is a portable cooler on a vehicle. With the continuous improvement of people's living standards, people have higher and higher requirements for the quality of vehicles. Therefore, the vehicle refrigerator has become popular in various types of the vehicles. In order to ensure a refrigeration effect of the vehicle refrigerator, thermal insulation material is usually arranged between a casing and an inner liner of the refrigerator. In addition, a foam material 7, such as polyurethane, is filled between the casing and the inner liner of the refrigerator to fix the thermal insulation material. In this way, the refrigeration effect is achieved. However, the foam material 7 will generate a thrust during the filling, which tends to cause the inner liner and the thermal insulation material to offset with respect to the casing, which tends to result in a matching problem caused by appearance deformation, and reduce the thermal insulation capacity of the thermal insulation layer.

In view of the above, embodiments of the present application provide a thermal insulation layer, a vehicle refrigerator, and a vehicle.

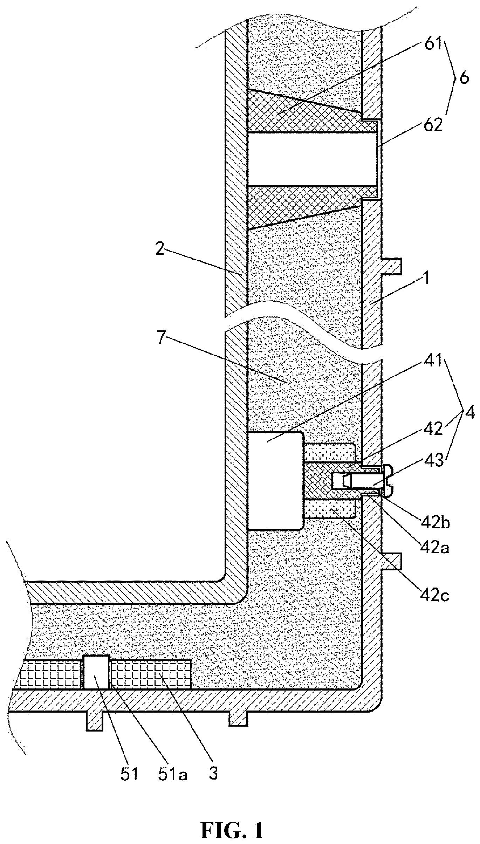

As shown in FIG. 1 to FIG. 4, an embodiment of the present application provides a thermal insulation layer including a casing 1, an inner liner 2, and a thermal isolation member 3 arranged between the casing and the inner liner. A positioning structure is arranged between the casing 1 and the inner liner 2, and the inner liner 2 and the thermal isolation member 3 are positioned on the casing 1 through the positioning structure.

Specifically, in the present embodiment, the casing 1 and the inner liner 2 serve as an inner layer structure and an outer layer structure of the thermal insulation layer respectively, so that an intermediate space is formed between the inner layer structure and the outer layer structure. By means of the thermal isolation member 3 arranged in the intermediate space, the heat exchange between an inner side and an outer side of the thermal insulation layer can be reduced, and the thermal insulation effect of the thermal insulation layer can be improved. A positioning structure is arranged in the intermediate space, to position and restrict the inner liner 2 and the thermal isolation member 3, so that the inner liner 2 and the thermal isolation member 3 can be located at corresponding positions inside the casing 1. When the foam material 7 is filled into the interior of the intermediate space, a thrust will be applied onto the inner liner 2 and the thermal isolation member 3. By means of the positioning structure 4, the inner liner 2 and the thermal isolation member 3 are held in the original position, and will not offset. Therefore, it can avoid the influence on the appearance caused by the deformation of the thermal insulation layer due to the offset of the inner liner 2, and ensure a matching effect in the subsequent stage. In addition, it can also avoid the movement and offset of the thermal isolation member 3, and ensure the thermal insulation capacity of the thermal insulation layer.

In some embodiments, the casing 1 may be made of modified plastic, such as PA6+GF30 glass fiber material, which has good wear resistance and high strength, to protect the entire thermal insulation layer. In addition, in order to reduce the difficulty of assembling of the inner liner 2 and the casing 1, the casing 1 may be formed by splicing a plurality of plates, and the inner liner 2 may be made of aluminum alloy material, which has good thermal conductivity, high strength and is easy to processing. In order to facilitate the installation of the thermal isolation member 3, the thermal isolation member 3 may be in the form of a plate to facilitate the assembly.

As shown in FIG. 1 to FIG. 3, the positioning structure includes an inner liner positioning member 4 arranged on an outer wall of the inner liner 2 and a thermal isolation layer positioning member 5 arranged on an inner wall of the casing 1.

Specifically, the inner liner positioning member 4 for positioning the inner liner 2 and the thermal isolation layer positioning member 5 for positioning the thermal isolation member 3 are arranged in the intermediate space between the casing 1 and the inner liner 2. The inner liner positioning member 4 can fixedly connect the inner liner 2 to a corresponding position in the casing 1, to prevent the offset of the inner liner 2 when the foam material is filled into the intermediate space, and prevent the deformation of the appearance of the thermal insulation layer. Therefore, the matching effect and the use effect of the thermal insulation layer are ensured. The thermal isolation layer positioning member 5 may restrict the thermal isolation member 3 to the inner wall of the casing 1, to avoid the movement or offset of the thermal isolation member 3 when the foam material is filled into the intermediate space, and ensure that the thermal isolation member 3 is held in the original position. Thus, a better thermal insulation effect of the thermal insulation layer is ensured.

As shown in FIG. 1, the inner liner positioning member 4 includes a support seat 41, a nut post 42, and a screw 43. The support seat 41 is arranged on the outer wall of the inner liner 2, and an end of the nut post 42 is fixedly connected to the support seat 41. The casing 1 is provided with a through hole 42a in which the screw 43 is arranged, and the screw 43 is screwed to the nut post 42.

Specifically, the support seat 41 arranged on the outer wall of the inner liner 2 is configured to provide a connection position for the nut post 42, to allow the positioning and connecting between the inner liner 2 and the casing 1 through the nut post 42 and the screw 43. When the inner liner 2 and the casing are assembled, the inner liner 2 is placed within the casing 1 in such a way that the nut post 42 corresponds to the through hole 42a on the casing 1, and then the screw 43 arranged in the through hole 42a is screwed into the nut post 42 to fix the casing 1 to the nut post 42, thereby realizing the positioning and connecting between the inner liner 2 and the casing 1.

In some embodiments, in order to ensure that the intermediate space is fully filled with the foam, and that the foam is in full contact with the inner liner 2, the support seat 41 is in the form of a hollow structure in communication with the intermediate space. During the filling of the foam, the foam material 7 may enter into the support seat 41 from the intermediate space, to ensure the normal flow of the foam material 7 in the intermediate space and improve the coverage of the foam material on the inner liner 2.

As shown in FIG. 1, one end of the nut post 42 away from the support seat 41 is provided with a positioning portion 42b, and the positioning portion 42b cooperates with the through hole 42a and is engaged in the through hole 42a.

Specifically, by means of the positioning portion 42b cooperating with the through hole 42a at one end of the nut post 42 away from the support seat 41, the nut post 42 and the through hole 42a correspond to each other. On the one hand, the positioning and installation between the inner liner 2 and the casing 1 are facilitated, and on the other hand, it is facilitated to screw the screw 43 into the nut post 42, thereby reducing the difficulty of assembly.

As shown in FIG. 1, at least one reinforcing rib 42c is provided on an arc-shaped curved surface of the nut post 42, and the reinforcing rib 42c is fixedly connected to the support seat 41.

Specifically, the reinforcing rib 42c is arranged on the arc-shaped curved surface of the nut post 42 to perform the reinforcement between the nut post 42 and the support seat 41, and improve the firmness of the inner liner positioning member 4.

As shown in FIG. 1, the positioning structure further includes a positioning enhancement member 6 for assisting the positioning of the inner liner 2. The positioning enhancement member 6 includes a positioning protrusion 61 arranged on the outer wall of the inner liner 2 and a positioning hole 62 arranged on the casing 1. The positioning protrusion 61 is located on a side of the inner liner positioning member 4, and an end of the positioning protrusion 61 cooperates with the positioning hole 62 and is engaged in the positioning hole 62.

Specifically, the positioning enhancement member is configured to assist the positioning of the inner liner 2, and improve the positioning accuracy and assembly efficiency of the inner liner 2 and the casing 1. When the inner liner 2 and the casing 1 are assembled, the positioning protrusion 61 arranged on the inner liner 2 may cooperate with the positioning hole 62 arranged on the casing 1 and be engaged in the positioning hole 62, thereby ensuring the inner liner 2 and the casing 1 to be positioned in the corresponding positions. Therefore, it is possible to further reduce the difficulty of corresponding the nut post 42 with the through hole 42a, and to ensure the mounting position of the inner liner 2.

In some embodiments, according to actual assembly requirements, the positioning protrusion 61 may be in the form of a protrusion structure with a circular, triangular, or quadrilateral cross section, so that the relative movement of the inner liner 2 will not occur after the positioning of the inner liner 2.

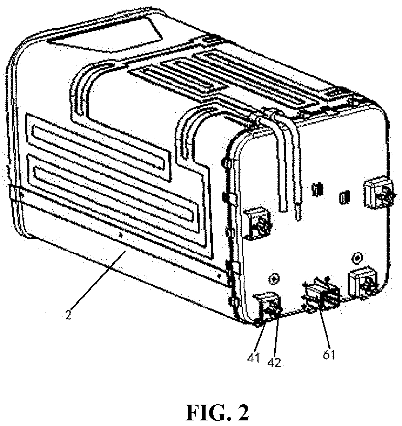

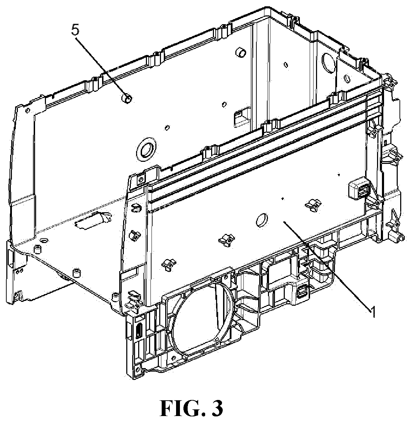

As shown in FIG. 2 and FIG. 3, the thermal isolation layer positioning member 5 includes a positioning post 51 arranged on the inner wall of the casing 1. The thermal isolation member 3 is provided with a positioning opening 51a, and the positioning post 51 cooperates with the positioning opening 51a and is engaged in the positioning opening 51a.

Specifically, the thermal isolation member 3 can be positioned on the inner wall of the casing 1 by the thermal isolation layer positioning member 5. The positioning post 51 cooperates with the positioning opening 51a on the thermal isolation member 3 and is engaged in the positioning opening. When the foam material is filled, although the thrust generated by the foam material 7 is applied onto the thermal isolation member 3, the thermal isolation member 3 can always be held in the original position due to the restriction effect of the positioning post 51. Therefore, the relative position between the thermal isolation member and the casing 1 is ensured to remain unchanged, and thus the offset and the movement are avoided, thereby ensuring the thermal insulation capacity of the thermal insulation layer.

As shown in FIG. 2, the thermal isolation member 3 is a vacuum thermal isolation plate.

Specifically, since the vacuum thermal isolation plate has a small thermal conductivity coefficient, the thermal insulation capacity is better. By configuring the thermal isolation member 3 as a vacuum thermal isolation plate, the thermal insulation capacity of the refrigerator can be improved, and the thickness of the thermal insulation layer can be effectively reduced to expand the inner space of the thermal insulation layer and realize a lightweight design.

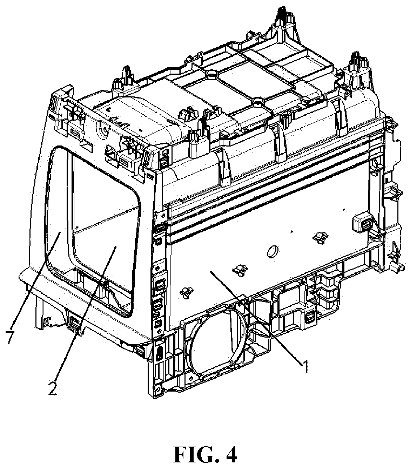

As shown in FIG. 4, embodiments of the present application provide a vehicle refrigerator including the thermal insulation layer according to the embodiments described above. By applying the thermal insulation layer described above to the vehicle refrigerator, the yield rate of the vehicle refrigerator can be improved, the problem of the offset of the casing 1 and the inner liner 2 due to the filling of the foam can be avoided, the elegant appearance of the vehicle refrigerator can be ensured, and the matching effect between the vehicle refrigerator and the corresponding components can be improved. In addition, it is also possible to prevent the offset of the thermal isolation member 3 during the filling of the foam, ensure the thermal insulation capacity of the vehicle refrigerator, and thus improve the overall quality of the vehicle.

Embodiments of the present application also provide a vehicle including the vehicle refrigerator according to the embodiments described above.

It should be noted that in the context of the present application, the relational terms such as "first" and "second" serve only to differentiate one element or operation from another element or operation, and do not require or imply any order between these entities or operations. In addition, the terms "include" or any other variants thereof are open-ended, that is, a process, method, article or device that includes a set of elements includes not only those elements but also other elements that are not explicitly listed, or that are inherent in such a process, method, article or device. In the absence of further limitations, an element defined by the phrase "includes a ..." does not preclude the existence of another identical element in the process, method, article or device in which it is included.

## Claims

1. A thermal insulation layer, comprising a casing, an inner liner, and a thermal isolation member arranged between the casing and the inner liner, wherein a positioning structure is arranged between the casing and the inner liner, the inner liner and the thermal isolation member being positioned on the casing through the positioning structure.

2. The thermal insulation layer according to claim 1, wherein the positioning structure comprises an inner liner positioning member and a thermal isolation layer positioning member, the inner liner positioning member being arranged on an outer wall of the inner liner, the thermal isolation layer positioning member being arranged on an inner wall of the casing.

3. The thermal insulation layer according to claim 2, wherein the inner liner positioning member comprises a support seat, a nut post and a screw, the support seat being arranged on the outer wall of the inner liner, an end of the nut post being fixedly connected to the support seat, the casing being provided with a through hole in which the screw is arranged, the screw being screwed to the nut post.

4. The thermal insulation layer according to claim 3, wherein one end of the nut post away from the support seat is provided with a positioning portion, which cooperates with the through hole and is engaged in the through hole.

5. The thermal insulation layer according to claim 3 or 4, wherein at least one reinforcing rib is provided on an arc-shaped curved surface of the nut post, the reinforcing rib being fixedly connected to the support seat.

6. The thermal insulation layer according to any one of claims 2 to 5, wherein the positioning structure further comprises a positioning enhancement member for assisting a positioning of the inner liner.

7. The thermal insulation layer according to claim 6, wherein the positioning enhancement member comprises a positioning protrusion arranged on the outer wall of the inner liner and a positioning hole arranged on the casing, the positioning protrusion being located on a side of the inner liner positioning member, an end of the positioning protrusion cooperating with the positioning hole and being engaged in the positioning hole.

8. The thermal insulation layer according to any one of claims 2 to 7, wherein the thermal isolation layer positioning member comprises a positioning post arranged on the inner wall of the casing, the thermal isolation member being provided with a positioning opening, the positioning post cooperating with the positioning opening and being engaged in the positioning opening.

9. The thermal insulation layer according to any one of claims 1 to 8, wherein the thermal isolation member is a vacuum thermal isolation plate.

10. A vehicle refrigerator, comprising the thermal insulation layer according to any one of claims 1 to 9.

11. A vehicle, comprising the vehicle refrigerator according to claim 10.
